# EUROPÄISCHE PATENTANMELDUNG

(11) **EP 2 040 108 A2**
(43) Veröffentlichungstag der Anmeldung: **25.03.2009**
(21) Anmeldenummer: 08010044.9
(22) Anmeldetag: 02.06.2008
(51) Int. Cl.: G02B 27/02

(54) **Vorrichtung zum betrachten eines Films**

(30) Priorität: 21.09.2007 DE 202007013314 U
(71) Anmelder: Stapf, Christian, 42781 Haan (DE)
(72) Erfinder: Stapf, Christian, 42781 Haan (DE)
(74) Vertreter: Demski, Siegfried

(57) **Zusammenfassung**

Die Erfindung betrifft eine Vorrichtung 1 zum Betrachten eines Films, insbesondere Röntgenfilms, wobei mindestens eine in einem Gehäuse 2 anordbare Beleuchtungseinrichtung und eine mindestens teilweise lichtdurchlässig ausgebildete Betrachtungsfläche 4 vorhanden ist, auf die ein Film auflegbar und im Wesentlichen einen Teil des Gehäuses 3 bildet. Um eine ausreichende Durchleuchtung des Filmes zu gewährleisten, müssen Strahlungsquellen verwendet werden, die eine ausreichende. Lichtintensität erzeugen. Dies wird im herkömmlichen Fall mit Leuchtmitteln bewerkstelligt, die neben der erwünschten Strahlungsleistung eine erhebliche Wärmeabstrahlung verursachen und zu einer Beschädigung des betrachteten Films führen können. Daher wird erfindungsgemäß eine Vorrichtung vorgeschlagen, die bezüglich der Lichtausbeute einen sehr hohen Wirkungsgrad aufweist und die zur Lichterzündung benötigte Energie größtenteils in Lichtstrahlung statt in Wärme umwandelt.

## Beschreibung

Die vorliegende Erfindung betrifft eine Vorrichtung zum Betrachten eines Films, insbesondere Röntgenfilms, aufweisend wenigstens eine in einem Gehäuse anordbare Beleuchtungseinrichtung und eine zumindest teilweise lichtdurchlässig ausgebildete Betrachtungsfläche, auf die der Film auflegbar ist und die im Wesentlichen einen Teil des Gehäuses bildet.

Gattungsgemäße Vorrichtungen, auch Filmbetrachtungsgeräte genannt, sind aus dem Stand der Technik bekannt und werden insbesondere zum Betrachten eines Röntgenfilms mit sehr hohem Kontrast verwendet. Solche Röntgenfilme stammen meist aus der Materialprüfung, insbesondere der Röntgenanalyse von Schweißnähten, Maschinen-, Antriebs-, Anlagen- oder Transportmittelkomponenten, welche während ihrer Verwendung einer hohen Belastung unterworfen sind und daher in regelmäßigen Anständen kontrolliert werden müssen. Überall dort, wo erhöhte Sicherheitsforderungen bestehen, ist es erforderlich, dass die vorgenannten Objekte einer zerstörungsfreien Materialprüfung unterzogen werden, wobei insbesondere die Prüfung von Schweißnähten von Interesse ist, bei der Filme verwendet werden, welche im Vergleich mit Röntgenfilmen aus der Medizintechnik sehr kontrastreich sein müssen, damit auch kleinste Haarrisse oder sonstige Schadstellen erkannt werden können.

Um einen sehr kontrastreichen Röntgenfilm ausreichend zu durchleuchten, müssen Filmbetrachtungsgeräte mit Leuchtmitteln mit hoher Leistung verwendet werden, wobei typischerweise Halogen- oder Quecksilberdampflampen zum Einsatz kommen, welche eine ausreichende Lichtintensität erzeugen können.

Solche herkömmliche Leuchtmittel weisen jedoch einen relativ geringen Wirkungsgrad auf, dass heißt, sie wandeln ein hohes Maß an verbrauchter Energie in Wärme statt in Lichtstrahlung um, sodass diese Leuchtmittel im Betrieb heiß werden, wobei ein entsprechendes Filmbetrachtungsgerät mit herkömmlichen Leuchtmitteln beispielsweise eine Wärmeleistung von mehr als 0,5 kW erzeugt.

Darüber hinaus haben die herkömmlichen Leuchtmittel den Nachteil, dass sie erst bei Erreichen einer bestimmten Betriebstemperatur die erwünschte Strahlungsleistung erbringen und es zudem nicht möglich ist, ein entsprechendes Filmbetrachtungsgerät in kurzen Zyklen ein- und auszuschalten und gleichzeitig eine qualitativ hochwertige Materialprüfung durchzuführen, da zum Einen stets gewartet werden muss, bis die Leuchtmittel ihre Betriebstemperatur erreicht haben und zum Anderen die Leuchtmittel durch dieses ständiges Ein- und Ausschalten Schaden nehmen können. Daher bleiben herkömmliche Filmbetrachtungsgeräte über einen längeren Zeitraum eingeschaltet, sodass die im Falle eines solchen Filmbetrachtungsgerät abgegebene Wärmemenge den Raum, in dem sich das Filmbetrachtungsgerät befindet, stark aufheizt, wobei es sich bei den Räumen für derartige Materialprüfungen meist um geschlossene Räume handelt, sodass eine die Materialprüfung durchführende Person sehr stark durch die auftretende hohe Temperatur belastet wird, was sich nicht zuletzt auf die Konzentration und somit die Auswertung der Prüfung beziehungsweise die Betrachtung des Films auswirken kann.

Des Weiteren ist es bei herkömmlichen Leuchtmitteln und der damit verbundenen erzeugten hohen Wärmemenge notwendig, dass die entsprechenden Filmbetrachtungsgeräte ständig intensiv gekühlt werden, um eine sichere Funktionsweise eines solchen Filmbetrachtungsgerätes zu gewährleisten.

Ausgehend von diesem Stand der Technik ist es die Aufgabe der vorliegenden Erfindung, eine Vorrichtung zum Betrachten eines Films, insbesondere Röntgenfilms, bereit zu stellen, welche die Nachteile aus dem Stand der Technik vermeidet.

Erfindungsgemäß ist vorgegeben, dass die Beleuchtungseinrichtung eine Vielzahl von LED's aufweist.

Vorteilhafte Ausgestaltungen der Vorrichtung sind in den Unteransprüchen offenbart.

Durch die Verwendung von LED's ist gegenüber der Verwendung von herkömmlichen Leuchtmitteln der besondere Vorteil gegeben, dass Leuchtmittel verwendet werden, welche bezüglich der Lichtausbeute einen sehr hohen Wirkungsgrad aufweisen, was bedeutet, dass die von den LED's verbrauchte Energie größtenteils in Lichtstrahlung statt in Wärme umgewandelt wird. Des Weiteren müssen die LED's zur Durchführung der Filmbetrachtung beziehungsweise einer entsprechenden Materialprüfung nicht erst auf Betriebstemperatur gebracht werden, um eine gewünschte Strahlungsleitung abzugeben, sondern die LED's liefern sofort die gewünschte Strahlungsleistung, sodass ein häufiges Ein- und Ausschalten eines entsprechenden Filmbetrachtungsgeräts weder schädlich für die LED's ist, noch das dadurch etwaige Wartezeiten für die Aufwärmphase von Leuchtmitteln in Kauf genommen werden müssen.

Weiter zeigt sich, dass mit der erfindungsgemäßen Vorrichtung ein Filmbetrachtungsgerät bereit gestellt wird, welches im Vergleich zu herkömmlichen Filmbetrachtungsgeräten unter relativ geringem Energieverbrauch betreibbar ist und zudem eine hohe Anwendungsflexibilität aufweist, indem die Vorrichtung zur Filmbetrachtung eingeschaltet und nach Abschluss der Filmbetrachtung wieder ausgeschaltet werden kann, ohne das sich diese Vorgänge nachteilig auf die Lebensdauer der Funktionsfähigkeit der erfindungsgemäßen Vorrichtung auswirken.

Nach einer vorteilhaften Ausgestaltung der Erfindung ist vorgesehen, dass die Beleuchtungseinrichtung eine Leiterplatte aufweist, auf der die LED's anordbar sind. Durch diese Ausgestaltung ist eine flächige Anordnung der LED's auf einfache Art und Weise möglich, wobei zudem eventuell anfallende Reparaturarbeiten in Form eines Austausches defekter LED's einfach durchführbar sind. Die Fläche, die durch die an der Leiterplatte angeordneten LED's vorgegeben ist, wird vorzugsweise derart dimensioniert, dass sie größer als die Betrachtungsfläche ausgebildet ist, um letztere in geeigneter Weise vollständig und gleichmäßig auszuleuchten und die Filmbetrachtung nicht durch etwaige Inhomogenitäten bezüglich der Beleuchtung, besonders im Randbereich negativ zu beeinflussen.

Eine weitere vorteilhafte Ausgestaltung der Erfindung sieht vor, dass die LED's als Power-LED's ausgebildet sind. Derartige Power-LED's weisen eine sehr hohe Strahlungsleistung auf, welche insbesondere für Röntgenfilme mit hohem Kontrast beziehungsweise für deren Durchleuchtung geeignet sind. Ansonsten weisen diese Power-LED's die gleichen Vorteile wie die oben genannten LED's auf, entwickeln jedoch eine wesentlich höhere Strahlungsleistung, welche mit einer etwas erhöhten Wärmeabgabe verbunden ist.

Es wird weiter vorgeschlagen, dass die LED's in Form einer Matrix dicht gepackt und flächig angeordnet sind. Die flächige Anordnung erfolgt dabei vorzugsweise auf einer Leiterplatte, sodass sich die LED's sehr exakt in einer Ebene befinden, wodurch auch durch diese Anordnung Inhomogenitäten verhindert werden können. Des Weiteren können die LED's in Form einer Matrix sehr dicht aneinander gepackt werden, wodurch ebenfalls eine höhere Strahlungsleistung und Strahlungsintensität erreichbar ist, was insbesondere bei herkömmlichen Leuchtmitteln nicht möglich ist, da diese aufgrund ihrer relativ hohen Wärmeentwicklung beabstandet voneinander angeordnet werden müssen, damit die die Funktionsweise eines herkömmlichen Filmbetrachtungsgerätes gewährleistende Kühlung erfolgen kann. Diese bisherige Beabstandung der Leuchtmittel, in deutlich größeren Abständen als im vorliegenden Fall bei der Verwendung von LED's, erzeugt ein relativ zur vorliegenden Erfindung inhomogenes Strahlungsfeld, während durch die LED's ein homogenes Strahlungsfeld gewährleistet ist.

Gemäß einer weiteren vorteilhaften Ausgestaltung der Erfindung ist vorgesehen, dass die Vorrichtung einen Kühlkörper aufweist, an dem die Leiterplatte anordbar ist. Dadurch kann die erzeugte Wärmemenge schnell von den LED's über die Leiterplatte an den Kühlkörper abgegeben werden, wozu beispielsweise die hohe Wärmeleitfähigkeit von Metallen ausgenutzt wird, durch welche die Wärme vom Entstehungsort, den LED's, schnell zu dem Kühlkörper abgeleitet werden kann. Bei einer ausreichend großen Dimensionierung des Kühlkörpers reicht die Kühlleistung eines solchen Kühlkörpers bereits teilweise aus, die Leiterplatte mit den LED's ausreichend zu kühlen. Die LED's können somit gemeinsam mit der Leiterplatte und dem Kühlkörper eine Baueinheit bilden, welche an einer geeigneten Position innerhalb des Gehäuses der Vorrichtung angeordnet ist.

Des Weiteren wird vorgeschlagen, dass die LED's innerhalb des Gehäuses unmittelbar an der Betrachtungsfläche angeordnet sind. Diese Anordnung ermöglicht eine maximale Strahlungsausbeute, sodass sich diese Ausgestaltung positiv auf den Energieverbrauch auswirken kann, indem Verluste bezüglich der Strahlungsleistung weitestgehend vermieden werden. Auch diese Anordnung der LED's unmittelbar an der Betrachtungsfläche ist bei der Verwendung herkömmlicher Leuchtmittel nicht möglich, da diese die Betrachtungsfläche derart aufheizen würden, dass sich die Hitze schädlich auf einen an der Betrachtungsfläche angeordneten Röntgenfilm auswirken würde. Zudem wäre eine Anordnung von herkömmlichen Leuchtmitteln unmittelbar an der Betrachtungsfläche von Nachteil, da, wie bereits oben erwähnt, die herkömmlichen Leuchtmittel einen bestimmten Abstand zueinander aufweisen müssen, welcher zu einer inhomogenen Ausleuchtung der Betrachtungsfläche führt, und zwar um so mehr, je näher die Leuchtmittel zur Betrachtungsfläche angeordnet sind.

Mit einer weiteren vorteilhaften Ausgestaltung der Erfindung wird vorgeschlagen, dass die Betrachtungsfläche einen Streukörper aufweist. Dieser kann in Form einer Streuscheibe ausgebildet sein, welche die Betrachtungsfläche ausbildet. Hierbei können aufgrund der geringen Wärmeerzeugung der LED's sowohl Kunststoff, als auch Glasstreukörper verwendet werden. Es kann jedoch auch möglich sein, dass als Betrachtungsfläche eine transparente Glasscheibe verwendet wird, welche einoder beidseitig mit einer streuenden Beschichtung versehen ist, um einen gewünschten Streukörper auszubilden. Die Eigenschaften des Streukörpers sind auf das Frequenzspektrum der Strahlung der LED's abzustimmen, um ein anwendungsbezogenes, gewünschtes Ergebnis bezüglich der Ausleuchtung eines Films oder Röntgenfilms zu erhalten.

Weiter ist vorgesehen, dass an dem Gehäuse im Bereich der Betrachtungsfläche eine Halteeinheit angeordnet ist. Diese Halteeinheit dient dem Halten eines an oder auf der Betrachtungsfläche angeordneten Films beziehungsweise Röntgenfilms, was insbesondere bei Ausgestaltungen der erfindungsgemäßen Vorrichtungen erforderlich ist, welche beispielsweise eine vertikal angeordnete Betrachtungsfläche aufweisen, wie es meist bei auf einem Arbeitstisch aufgestellten Vorrichtungen der Fall ist. Diese Halteeinheit kann beispielsweise als einfache Schiene ausgebildet sein, auf der der Rand eines Films aufliegt, oder es können Klemmmittel vorgesehen sein, mit denen der Film im Bereich der Betrachtungsfläche festklemmbar ist und so eine exaktere Filmbetrachtung im Rahmen einer Materialprüfung erfolgen kann.

Nach einer weiteren vorteilhaften Ausgestaltung der Erfindung weist die Vorrichtung eine Steuereinheit auf, mittels der wenigstens die Helligkeit der LED's regelbar ist. Es können aber auch weitere Funktionen, wie beispielsweise eine Kühlung, mittels der Steuereinheit steuerbar sein, je nach Wunsch und Anforderung an die erfindungsgemäße Vorrichtung. Auch hier zeigt sich wieder ein wesentlicher Vorteil der Verwendung von LED's statt herkömmlichen Leuchtmitteln, da bei letzteren eine Regelung der Helligkeit nicht so schnell und exakt erfolgen kann wie bei den LED's, sondern zumindest jeweils eine gewisse Zeit abgewartet werden muss, bis die herkömmlichen Leuchtmittel die gewünschte Strahlungsleistung erreicht haben.

Eine weitere vorteilhafte Ausgestaltung der Erfindung sieht vor, dass die Vorrichtung eine Energieversorgungseinheit aufweist, die ein Netzteil und/oder eine Batterie mit einem Ladegerät aufweist. Welche dieser Ausgestaltungen gewählt wird, hängt von den jeweiligen Anwendungsgebieten der erfindungsgemäßen Vorrichtung ab, sodass beispielsweise stationär angeordnete, als auch mobile Vorrichtungen denkbar und realisierbar sind.

Ferner wird mit der Erfindung vorgeschlagen, dass die Vorrichtung eine Lüftungseinheit aufweist. Diese Lüftungseinheit dient zum Abführen entstandener Wärme, wobei die Lüftungseinheit, beispielsweise einen Ventilator oder ähnliches, auf die LED's, die Leiterplatte und den Kühlkörper oder auch nur auf einen dieser Bestandteile direkt einwirken kann, je nachdem, welche Anforderungen an die erfindungsgemäße Vorrichtung gestellt werden. Auch diese Lüftungseinheit ist mittels der Steuereinheit ansteuerbar, sodass eine Steuerung und Regelung der Lüftungseinheit erfolgen kann, was insbesondere bei der Verwendung der LED's von Vorteil ist, da diese nicht so viel Wärme erzeugen, dass ein ständiger Betrieb der Lüftungseinheit erforderlich ist. Somit kann die Ansteuerung der Lüftungseinheit in Abhängigkeit der beispielsweise mittels eines Temperatursensors detektierten Temperatur innerhalb des Gehäuses durch die Steuereinheit erfolgen. Zum Zweck der Steuerung kann die Steuereinheit beispielsweise über einen Potentiometer verfügen, mit dem die Energieabgabe beispielsweise an die Lüftungseinheit steuerbar ist.

Weitere Vorteile und Merkmale der vorliegenden Erfindung werden im Folgenden anhand der Figuren beschrieben.

### Es zeigt

- Fig. 1: ein Ausführungsbeispiel für eine erfindungsgemäße Vorrichtung,
- Fig. 2: ein Ausführungsbeispiel für eine Baueinheit bestehend aus LED's, Leiterplatte sowie Kühlkörper und
- Fig. 3: ein Ausführungsbeispiel für ein Blockschaltbild der erfindungsgemäßen Vorrichtung.

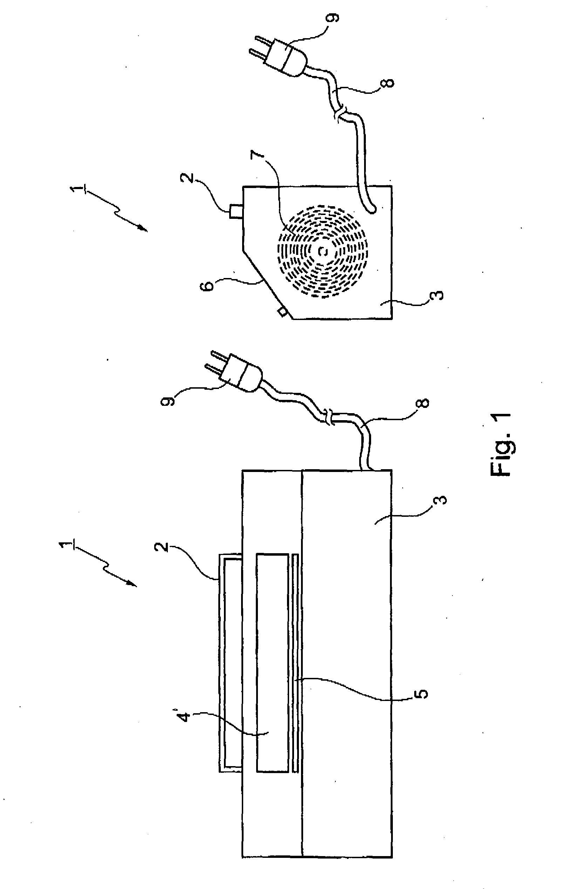

Figur 1 zeigt auf der linken Seite ein Ausführungsbeispiel für eine erfindungsgemäße Vorrichtung 1, welche als tragbares Filmbetrachtungsgerät ausgebildet ist, wozu die Vorrichtung 1 an ihrer Oberseite mit einer Handhabe 2 versehen ist. Diese Handhabe 2 ist an dem Gehäuse 3 der Vorrichtung 1 befestigt, welche als integraler Bestandteil eine Betrachtungsfläche 4 aufweist, an der ein Röntgenfilm anordbar ist und welche wenigstens teilweise transparent ausgebildet ist. Unterhalb dieser Betrachtungsfläche 4 ist eine Halteeinheit 5 für einen Film angeordnet, welche in dieser Ausführungsform als Halteschiene ausgebildet ist, auf der sich der Rand eines Films abstützen kann. Diese Ausbildung der Halteeinheit 5 als Halteschiene ist deshalb vorteilhaft, da, wie dem rechten Teil der Figur 1 entnommen werden kann, die Betrachtungsfläche 4 in einer geneigten Fläche 6 des Gehäuses 3 angeordnet ist, sodass ein auf der Betrachtungsfläche 4 angeordneter Film ohne die Halteeinheit 5 nach unten abrutschen würde. Die rechts in Figur 1 dargestellte Seitenansicht der Vorrichtung 1 zeigt des Weiteren Lüftungsschlitze 7, welche vorzugsweise in beiden Seitenteilen des Gehäuses 3 der Vorrichtung 1 angeordnet sind. Des Weiteren ist die Vorrichtung 1 der Figur 1 mit einem Netzkabel 8 und einem daran angeordneten Netzstecker 9 versehen. Was Figur 1 nicht zu entnehmen ist, ist das hinter der Betrachtungsfläche 4 unmittelbar an diese angrenzend eine Beleuchtungseinrichtung mit LED's angeordnet ist und dass hinter den Lüftungsschlitzen 7 ein Ventilator zum Abführen der in dem Gehäuse erzeugten Wärme vorhanden ist. Auch lässt die Ausgestaltung der Figur 1 offen, ob die Vorrichtung 1 lediglich ein Netzteil aufweist oder mit einer Batterie und einem Ladegerät versehen ist, oder ob die Vorrichtung 1 beide Alternativen aufweist, um beispielsweise bei Stromausfall im Batteriebetrieb weiter arbeiten zu können.

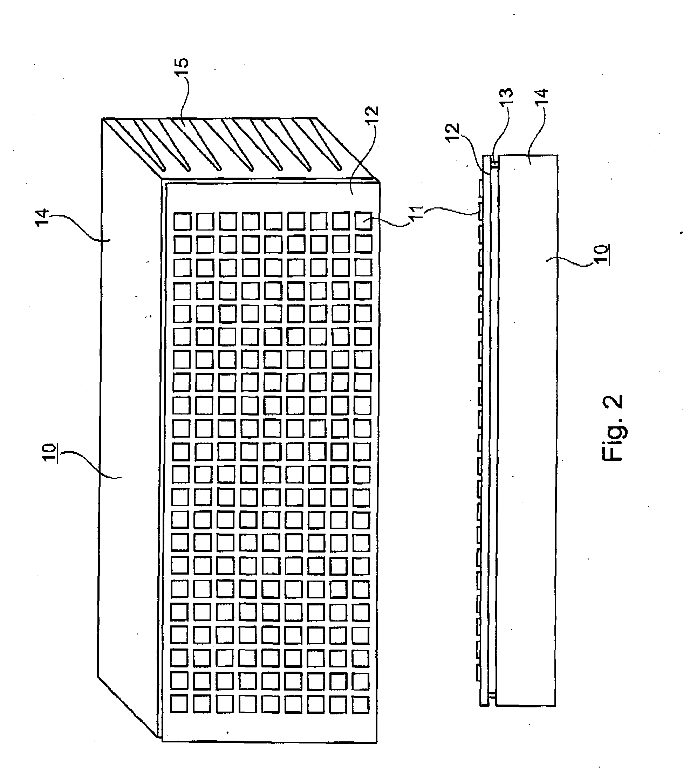

Figur 2 zeigt in der oberen und der unteren Hälfte jeweils ein Ausführungsbeispiel für eine Baueinheit 13, die LED's 11 aufweist, die in Form einer Matrix flächig und dicht gepackt an einer Leiterplatte 12 angeordnet sind, wobei die Leiterplatte 12 über metallische Verbindungselemente 13 zur Abführung der durch die LED's 11 erzeugten Wärme mit einem Kühlkörper 14 verbunden ist. In der oberen Darstellung ist der Kühlkörper 14 wesentlich größer als in der unteren Darstellung ausgebildet, wobei die Größe des Kühlkörpers anwendungsspezifisch ausgestaltbar ist. Des Weiteren ist der oberen Darstellung zu entnehmen, dass der Kühlkörper 14 mit Lüftungseinschnitten 15 versehen ist, welche zur Vergrößerung der Oberfläche und somit der verbesserten Wärmeabfuhr durch den Kühlkörper 14 dienen.

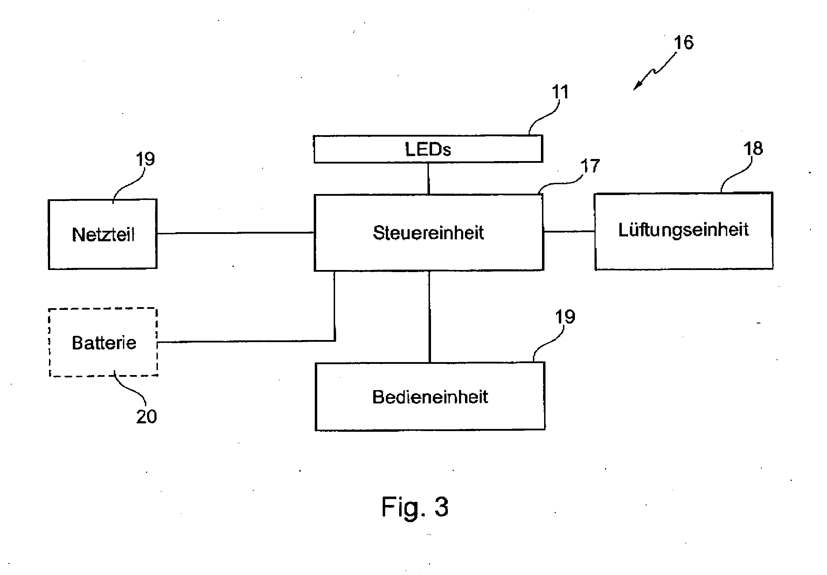

Der Figur 3 ist ein Ausführungsbeispiel für ein Blockschaltbild 16 für die Vorrichtung 1 zu entnehmen. Das Herzstück der Vorrichtung 1 wird somit durch die Steuereinheit 17 gebildet, welche zur Steuerung der Helligkeit der LED's 11 mit diesen verbunden ist. Des Weiteren ist die Steuereinheit 17 mit der Lüftungseinheit 18 verbunden, welche beispielsweise als Ventilator ausgebildet ist, der durch die Steuereinheit 17 bei Überschreiten einer vorbestimmten Temperatur eingeschaltet wird. Ferner ist die Steuereinheit 17 mit einem Netzteil 19 und mit einer Batterie 20 verbunden, wobei die Batterie beispielsweise nur im Fall eines Stromausfalls verwendet wird und ansonsten während des Betriebs wieder aufgeladen wird.

Aus dem Vorbeschriebenden wird deutlich, dass die erfindungsgemäße Vorrichtung 1 ein Filmbetrachtungsgerät darstellt, welches unter relativ geringem Energieverbrauch eine qualitativ hochwertige Materialprüfung in Form einer Filmbetrachtung ermöglicht, indem bei maximaler Strahlungsausbeute ein Höchstmaß an Strahlungshomoganität gegeben ist.

Die beschriebenen Ausführungsbeispiele dienen der Erläuterung und sind nicht beschränkend.

### Bezugszeichenliste:

- 1: Vorrichtung
- 2: Handhabe
- 3: Gehäuse
- 4: Betrachtungsfläche
- 5: Halteeinheit
- 6: Fläche
- 7: Lüftungsschlitz
- 8: Netzkabel
- 9: Netzstecker
- 10: Baueinheit
- 11: LED
- 12: Leiterplatte
- 13: Verbindungselement
- 14: Kühlkörper
- 15: Lüftungseinschnitt
- 16: Blockschaltbild
- 17: Steuereinheit
- 18: Lüftungseinheit
- 19: Netzteil
- 20: Batterie

## Patentansprüche

1. Vorrichtung (1) zum Betrachten eines Films, insbesondere Röntgenfilms, aufweisend wenigstens eine in einem Gehäuse (2) anordbare Beleuchtungseinrichtung und eine zumindest teilweise lichtdurchlässig ausgebildete Betrachtungsfläche (4), auf die der Film auflegbar ist und die im Wesentlichen einen Teil des Gehäuses (3) bildet,
**dadurch gekennzeichnet,**
**dass** die Beleuchtungseinrichtung eine Vielzahl von LED's (11) aufweist.

2. Vorrichtung (1) nach Anspruch 1,
**dadurch gekennzeichnet,**
**dass** die Beleuchtungseinrichtung eine Leiterplatte (12) aufweist, an der die LED's (11) anordbar sind.

3. Vorrichtung (1) nach einem der vorhergehenden Ansprüche,
**dadurch gekennzeichnet,**
**dass** die LED's (11) als Power-LED's ausgebildet sind.

4. Vorrichtung (1) nach einem der vorhergehenden Ansprüche,
**dadurch gekennzeichnet,**
**dass** die LED's (11) in Form einer Matrix dicht gepackt und flächig angeordnet sind.

5. Vorrichtung (1) nach einem der Ansprüche 2 bis 4,
**gekennzeichnet durch**
einen Kühlkörper (14), an dem die Leiterplatte (12) anordbar ist.

6. Vorrichtung (1) nach einem der vorhergehenden Ansprüche,
**dadurch gekennzeichnet,**
**dass** die LED's (11) innerhalb des Gehäuses (3) unmittelbar an der Betrachtungsfläche (4) angeordnet sind.

7. Vorrichtung (1) nach einem der vorhergehenden Ansprüche,
**dadurch gekennzeichnet,**
**dass** die Betrachtungsfläche (4) einen Streukörper aufweist.

8. Vorrichtung (1) nach einem der Ansprüche,
**dadurch gekennzeichnet,**
**dass** an dem Gehäuse (3) im Bereich der Betrachtungsfläche (4) eine Halteeinheit (5) angeordnet ist.

9. Vorrichtung (1) nach einem der vorhergehenden Ansprüche,
**gekennzeichnet durch**
eine Steuereinheit (17), mittels der wenigstens die Helligkeit der LED's (11) regelbar ist.

10. Vorrichtung (1) nach einem der vorhergehenden Ansprüche,
**gekennzeichnet durch**
eine Energieversorgungseinheit, welche ein Netzteil (19) und/oder eine Batterie (20) mit einem Ladegerät aufweist.

11. Vorrichtung (1) nach einem der vorhergehenden Ansprüche,
**gekennzeichnet durch**
eine Lüftungseinheit (18).
